# EUROPÄISCHE PATENTSCHRIFT

(11) **EP 4 044 792 B1**
(45) Veröffentlichungstag und Bekanntmachung des Hinweises auf die Patenterteilung: **27.09.2023**
(21) Anmeldenummer: 20812216.8
(22) Anmeldetag: 13.10.2020
(51) Int. Cl.: A01D 46/30

(54) **ERNTEVORRICHTUNG**
HARVESTER
DISPOSITIF DE RÉCOLTE

(30) Priorität: 14.10.2019 DE 102019127586
(43) Veröffentlichungstag der Anmeldung: 24.08.2022
(73) Patentinhaber: IAV GmbH Ingenieurgesellschaft Auto und Verkehr, 10587 Berlin (DE)
(72) Erfinder: DÜNOW, Peter, 18119 Rostock (DE); LACK, Steffen, 19067 Leezen (DE); KIMMEL, Melanie, 85276 Pfaffenhofen a. d. Ilm (DE); SCHLENTHER, Nils, 23966 Wismar (DE); STEINBRECHER, Christian, 23966 Wismar (DE); MALETZKI, Gunnar, 18057 Rostock (DE)
(74) Vertreter: Fukala, Georg
(86) Internationale Anmeldenummer: PCT/DE2020/100884
(87) Internationale Veröffentlichungsnummer: WO 2021/073688

(56) Entgegenhaltungen:
- CN-A- 107 711 078
- DE-A1-102017 214 332
- GB-A- 2 202 724
- US-A- 5 544 474

## Beschreibung

Die vorliegende Erfindung betrifft eine Erntevorrichtung mit den Merkmalen gemäß den Patentansprüchen.

Zum Beispiel gemäß dem Dokument US 5 544 474 A ist eine Erntevorrichtung Stand der Technik. Fraglich ist, ob anhand der dort offenbarten Merkmale ein wiederholtes, sicheres Umgreifen des Erntegutes möglich ist. So ist zwar eine Erkennung einer Annäherung der Erntevorrichtung an das Erntegut vorgesehen, jedoch erfolgt der Vorgang des Umgreifens des Ernteguts ohne weitere Maßnahmen zur Sicherstellung, dass das erkannte Erntegut auch tatsächlich mittels der Erntevorrichtung erreicht und umgriffen wird.

Gemäß dem Dokument GB 2 202 724 A ist ein Obstpflücker mit einem Körper Stand der Technik, der aus einem Rohr besteht, von dem ein Teil zu Fingern geformt ist, die, wenn sie mit einem Griff verbunden sind, dem Bediener das Pflücken von Obst von Bäumen ermöglichen. Die Früchte sind innerhalb des Rohrs der Finger geschützt, die wie eine Rutschkupplung auf unreife Früchte wirken, wenn sie gedreht werden. Diese können reifen gelassen oder alternativ geerntet werden, indem der Stiel zwischen den Fingern eingeklemmt wird, indem das Werkzeug höher gedrückt und dann gedreht wird. Ein verstellbarer Fingerspreizer, der durch die Spannung der Finger, die alle von einem elastischen Band gehalten werden, in Position gehalten wird, ermöglicht das Sammeln verschiedener Arten und Größen von Früchten.

Gemäß dem Dokument GB 604 435 A ist eine Einrichtung an oder zur Befestigung an einem Stab oder dergleichen zum Sammeln von Früchten und zum Greifen von abgerundeten Gegenständen Stand der Technik, welche einen Kopf umfasst, der drei im Wesentlichen gleichmäßig beabstandete und im Wesentlichen gleich divergierende, gerade, starre Zinken oder dergleichen trägt, die so angeordnet sind, dass sie auf einer konischen Fläche liegen, wobei der Neigungswinkel der Zinken oder dergleichen zur Achse der konischen Fläche zwischen 10 und 20 Grad beträgt.

Gemäß dem Dokument GB 521 908 A ist ein Obstpflücker Stand der Technik, bestehend aus einem hohlen kegelförmigen, pyramidenförmigen oder ähnlichen konvergierenden Element aus Blech, das dazu bestimmt ist, das Obst zu ergreifen und es durch eine Drehbewegung zu entfernen, wobei das untere Ende eines solchen Elements mit einer Hülse oder Zwinge zur Aufnahme einer Stange oder eines Griffs versehen ist. Ein hohles, umgekehrt pyramidenförmiges Element ist an entgegengesetzten diagonalen Winkeln in Hälften geteilt, wobei die Hälfte mit einer Hülse zur Aufnahme eines Stabes verbunden ist. Die Teile sind an der Teilung mit seitlichen Flanschen versehen, wobei die Flansche des Teils an ihren unteren Enden nach oben gebogen sind, um die unteren Enden der seitlichen Flansche des festen Teils aufzunehmen und eine Drehverbindung zu schaffen. Die Teile werden durch ein Federband auseinandergedrückt und mit Hilfe einer Schraube, die in eine Zunge des beweglichen Teils eingreift, relativ zueinander eingestellt. Der obere Rand der pyramidenförmigen Teile kann mit einer V-förmigen Schneideöffnung oder Kerbe versehen sein.

Gemäß dem Dokument GB 250 501 A ist ein Fruchtsammler Stand der Technik. Bei einem solchen Fruchtsammler, bei dem ein Behälter mit über seine Öffnung hinausragenden Zinken zum Ablösen der Früchte versehen ist, sind die Zinken von der Ebene der Öffnung nach außen geneigt, um den Fall der Früchte in den Behälter zu erleichtern.

Gemäß dem Dokument GB 219 879 A ist ein Schergerät Stand der Technik, welches mit löffelförmigen Schneiden versehen ist, die an der Spitze geschärft sind. Die Früchte werden abgeschnitten und verbleiben in der von den Scheren gebildeten Schale oder werden in einem am Gerät angebrachten Behälter aufgefangen. In einer Abwandlung wird die Schale durch gebogene Krallen gebildet, wobei die Schneiden weggelassen werden. Am Gerät können Abschneider für Schnüre oder Drähte angebracht sein.

Gemäß dem Dokument US 4 350 005 A ist eine Vorrichtung zum Pflücken von Früchten von einem Baum Stand der Technik. Die Vorrichtung umfasst einen allgemein zylindrisch geformten, nach oben offenen Behälter, der am oberen Ende einer länglichen Stange befestigt ist. Eine Vielzahl von beabstandeten Fingern ragt vom oberen Randteil des Behälters nach oben. Jeder Finger umfasst einen vergrößerten Basisabschnitt, der aus nach unten geneigten Schultern besteht, die sich von den Seitenkanten der Finger seitlich nach außen erstrecken, um sich mit den entsprechenden Schultern der nächsten benachbarten Finger zu schneiden. Die Kantenabschnitte der Schultern sind geschärft, um Schneidkanten zu bilden, die den Stiel der Frucht sauber durchschneiden, wenn die Kanten nach oben gegen den Stiel gedrückt werden, wodurch die Frucht in den Behälter fallen kann.

Es ist daher Aufgabe der vorliegenden Erfindung, ein wiederholtes, sicheres Fixieren und Umgreifen von Erntegut zu ermöglichen.

Diese Aufgabe wird erfindungsgemäß mittels einer Vorrichtung mit den Merkmalen gemäß den Patentansprüchen gelöst.

Weitere vorteilhafte Ausgestaltungen der vorliegenden Erfindung sind dem nachfolgenden Ausführungsbeispiel sowie den abhängigen Patentansprüchen zu entnehmen.

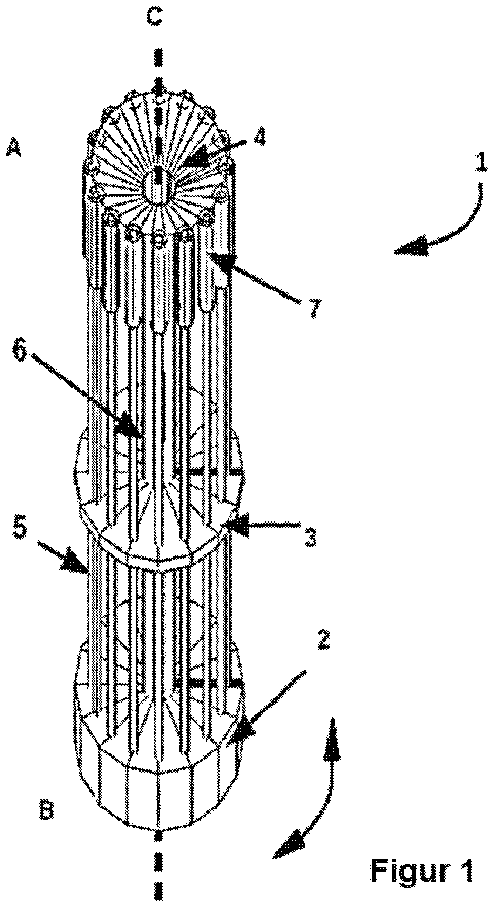

In Figur 1 ist die erfindungsgemäße Erntevorrichtung 1, welche beispielsweise zum Pflücken von Obst, Früchten oder Gemüse geeignet ist, in einer Ausgangsstellung gezeigt. Mit anderen Worten handelt es sich gemäß der vorliegenden Erfindung um einen Erntekopf oder Pflücker. Mit dieser Erntevorrichtung 1 können insbesondere empfindliche Früchte wie z. B. Erdbeeren unterschiedlicher Größe und Form maschinell ergriffen und von der Pflanze getrennt werden. Die Funktion der Erntevorrichtung 1 ergibt sich aus dem Zusammenspiel verschiedener Komponenten unter Nutzung unterschiedlicher physikalischer Prinzipien.

Wie in Figur 1 gezeigt, weist die Erntevorrichtung 1 zwei Enden A und B auf. Das erste Ende A ist dem Erntegut zugewandt und das zweite Ende B ist dem Erntegut, d. h. insbesondere der zu erntenden Frucht, abgewandt. Zwischen den beiden Enden A und B erstreckt sich die Längsachse C der Erntevorrichtung 1. Ausgehend vom zweiten Ende B der Erntevorrichtung sind in folgender Reihenfolge entlang der Längsachse C angeordnet: ein Basiskörper 2, ein Führungskörper 3 und ein Saugkörper 4.

Die Erntevorrichtung 1 ist im Bereich des zweiten Endes B mit dem Arm eines Roboters verbunden bzw. an dem zweiten Ende B mit dem Arm eines Roboters verbunden, was in Figur 1 nicht gezeigt ist. Die erfindungsgemäße Erntevorrichtung 1 entspricht somit einem Robotergreifer.

Der Basiskörper 2 und der Führungskörper 3 sind mit einem Abstand zueinander entlang der Längsachse C angeordnet, wobei der Abstand beispielsweise 40% von dem Abstand zwischen den beiden Enden A und B, also von der Länge der Erntevorrichtung 1 bzw. des erfindungsgemäßen Greifers, beträgt.

Um die Längsachse C ist eine Vielzahl von Stäben 5 angeordnet, welche sich ausgehend vom Basiskörper 2 bis zum ersten Ende A erstrecken. D. h. die Längsachse C wird von mehreren Stäben 5 umschlossen. Mit noch anderen Worten ist eine Vielzahl von Stäben 5 um die Längsachse C herum angeordnet, wobei die Stäbe 5 die Längsachse C insbesondere kreisförmig bzw. ringförmig umschließen. Im Ergebnis weist somit die erfindungsgemäße Erntevorrichtung 1 in einer Ausgangs-/Basisstellung (Figur 1) die Form eines Rohres auf, insbesondere mit geringem bzw. mit einem so gering wie möglichen Durchmesser, was das Erreichen und das Fixieren von zu pflückenden Früchten in einem Strauch wesentlich erleichtert und zwar auch, wenn diese Früchte teilweise durch Blätter verdeckt sind.

Die Stäbe 5 sind aus einem flexiblen bzw. elastischen Material ausgeführt. Insbesondere bestehen die Stäbe 5 aus Federstahl. D. h. es handelt sich um dünne Federstahldrähte. Beispielsweise werden 16 (oder mehr) Stäbe 5 mit einem runden Querschnitt verwendet, wobei jeder Stab einen Durchmesser von 1mm aufweist und 120mm lang ist. Von Vorteil ist auf jeden Fall eine möglichst große Anzahl flexibler bzw. federnder Stäbe 5. Wie im weiteren Verlauf der Beschreibung deutlich werden wird, ist nämlich eine große Anzahl von Stäben 5 günstig, da sich so eine gleichmäßige Kraftverteilung auf der Oberfläche des Erntegutes ergibt und sich die Stäbe 5 durch die Federwirkung sozusagen automatisch der Form des Erntegutes/der Frucht anpassen, so dass mechanische Belastungen der Oberfläche des Ernteguts und damit Beschädigungen minimiert werden. Natürlich können die Stäbe 5 auch aus einem anderen elastischen/federnden Material ausgeführt sein, beispielsweise einem Kunststoff oder einem Verbundwerkstoff.

Die Stäbe 5 erstrecken sich, wie beschrieben, vom Basiskörper 2 bis zum ersten Ende Ader Erntevorrichtung 1, wobei die Stäbe 5 mit dem Basiskörper 2 verbunden sind. Insbesondere sind die Stäbe 5 mit dem Basiskörper 2 verklebt oder verschweißt.

Die Stäbe 5 sind weiterhin durch Ausnehmungen/Bohrungen in dem Führungskörper 3 geführt. Alternativ können die Stäbe 5 auch durch Leitelemente/Ösen/Hülsen geführt sein, welche am Führungskörper 3 (außen) angeordnet sind (in den Figuren nicht gezeigt). Die Ausnehmungen/Bohrungen in dem Führungskörper 3 sind größer, als es für die Durchführung der Stäbe 5 erforderlich ist, so dass die Stäbe 5 in diesen Ausnehmungen/Bohrungen um einen bestimmten Winkel gekippt werden können, was, wie im weiteren Verlauf beschrieben, von Wichtigkeit ist. Mit anderen Worten ist der Durchmesser der jeweiligen bzw. betreffenden Löcher in dem Führungskörper 3 zur Führung/Durchführung der Stäbe 5 in dem bzw. durch den Führungskörper 3 größer als der Durchmesser der Stäbe 5, insofern der Querschnitt der Stäbe 5 rund ist. Die Ausnehmungen/Bohrungen in dem Führungskörper 3 sind beispielsweise doppelt so groß, als es für die Durchführung der Stäbe 5 erforderlich wäre. Die vorgenannten Überlegungen treffen auch für entsprechende Leitelemente/Ösen/Hülsen zu, welche am Führungskörper 3 (außen) angeordnet sind. Zusammengefasst hängt die Größe der Ausnehmungen/Bohrungen in dem Führungskörper 3 bzw. der Leitelemente/Ösen/Hülsen, welche am Führungskörper 3 (außen) angeordnet sind, von der Dicke des Führungskörpers 3 ab bzw. von der Höhe der Leitelemente/Ösen/Hülsen. Der Führungskörper 3 bzw. alternativ die Leitelemente/Ösen/Hülsen sollten jedoch möglichst dünn bzw. niedrig/flach ausgeführt sein und aus einem Material sein, das gute Gleiteigenschaften aufweist, beispielsweise Bronze.

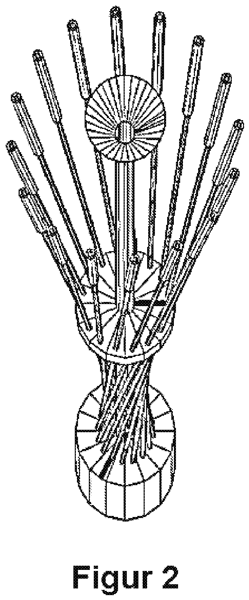

Dadurch, dass die Stäbe 5 mit dem Basiskörper 2 verbunden sind und durch Ausnehmungen in dem Führungskörper 3 oder durch Leitelemente (außen) am Führungskörper 3 geführt sind, verformen sich die Stäbe 5 elastisch, d. h. es erfolgt eine Ausweichbewegung der Stäbe 5 in dem Führungskörper 3 bzw. den Leitelementen/Ösen/Hülsen, welche am Führungskörper 3 (außen) angeordnet sind, wenn zum Beispiel eine Drehbewegung des Führungskörpers 3 um die Längsachse C gegenüber dem nicht drehbewegten Basiskörper 2 erfolgt, so dass sich die Stäbe 5 im Bereich zwischen Führungskörper 3 und dem ersten Ende A von der Längsachse C fortbewegen bzw. sich der Abstand der Stäbe 5 von der Längsachse C vergrößert (im genannten Bereich), siehe Figur 2. Anders gesagt, erfolgt auf diese Weise ein Öffnen des (Fächer-)Greifers, also der Erntevorrichtung 1. Alternativ kann anstelle der zuvor genannten Drehbewegung des Führungskörpers 3 um die Längsachse C gegenüber dem nicht drehbewegten Basiskörper 2 auch eine Drehbewegung des Basiskörpers 2 um die Längsachse C gegenüber dem nicht drehbewegten Führungskörper 3 erfolgen, wie in Figur 1 durch den Doppelpfeil angedeutet ist, oder in einer noch weiteren alternativen Ausführung eine (ggf. sogar gleichzeitig stattfindende/simultane) gegensinnige Drehbewegung von Führungskörper 3 und Basiskörper 2 erfolgen, jeweils um die Längsachse C, um ein Öffnen des (Fächer-)Greifers, also der Erntevorrichtung 1, zu bewirken. In allen drei Fällen wird somit das beschriebene fächerartige Öffnen der Erntevorrichtung 1 erreicht. Zusammengefasst wird es erfindungsgemäß zum Öffnen und Schließen der Erntevorrichtung 1 ausgenutzt, dass die Stäbe 5 derart beschaffen bzw. ausgelegt sind, so dass diese sich insbesondere aufgrund des geringen Querschnitts der Stäbe 5 leicht elastisch (reversibel) verbiegen/verformen lassen. D. h. das Öffnen und Schließen der Erntevorrichtung 1 erfolgt einfach durch Verbiegen/Verformen/Belasten bzw. Zurückbiegen bzw. Zurückfedernlassen/Entformen/Entlasten der Stäbe 5. Damit sind keine weiteren mechanischen Elemente wie Hebel oder Lager erforderlich. Die Erntevorrichtung 1 lässt sich dadurch sehr einfach und kostengünstig herstellen. Außerdem erhöht sich die Robustheit der mechanischen Konstruktion. Die Drehbewegung des Führungskörpers 3 um die Längsachse C bzw. des Basiskörpers 2 um die Längsachse C erfolgt bevorzugt dadurch, dass Führungskörper 3 und/oder Basiskörper 2 mit einem geeigneten Antrieb zusammenwirken bzw. verbunden sind, insbesondere mit einem Servomotor. Eine solche Ansteuerungs-/Antriebseinheit umfasst außerdem bevorzugt eine Positionserkennung bzw. Positionsregelung mit entsprechender Sensorik, wie allgemein bekannt.

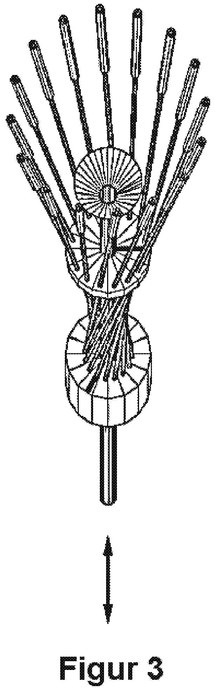

Wie in den Figuren 2 und 3 erkennbar, ist der Saugkörper 4 entlang der Längsachse C der Erntevorrichtung 1 beweglich ausgeführt, wie durch den Doppelpfeil in Figur 3 angedeutet. Somit kann mittels des Saugkörpers 4 fixiertes Erntegut in Richtung des Führungskörpers 3 transportiert werden. Insbesondere ist der Saugkörper 4 also entlang der Längsachse C der Erntevorrichtung 1 in einem Bereich zwischen dem Führungskörper 3 und dem ersten Ende A bewegbar. Natürlich kann der Saugkörper 4 auch diesen Bereich verlassen und entlang der Längsachse C der Erntevorrichtung 1 ausgehend vom Führungskörper 3 in Richtung des ersten Endes A bewegt und im weiteren Verlauf über das erste Ende A hinausbewegt werden, um auf diese Weise den Bereich zwischen dem Führungskörper 3 und dem ersten Ende A zu verlassen, insbesondere, um weiter entferntes Erntegut zu fixieren. Der Saugkörper 4 ist insbesondere ein Balgsauger bzw. ein Balgsauggreifer, der mit einem Vakuumsystem zusammenwirkt bzw. verbunden ist, so dass ein Unterdruck in dem Saugkörper 4 erzeugt und eine erste Verbindung zwischen Erntegut und Erntevorrichtung 1 durch ein Ansaugen und Fixieren des Erntegutes am Saugkörper 4 hergestellt wird. Die Abmessungen des Saugkörpers 4 sind bzw. der Durchmesser des Saugkörpers 4 ist derart beschaffen, dass die Stäbe 5 bei geschlossener Erntevorrichtung 1 eng an dem Saugkörper 4 anliegen, siehe Figur 1. Bevorzugt befindet sich der Saugkörper 4 zu Beginn eines Ernte-/Pflückprozesses an dem ersten Ende Ader Erntevorrichtung 1, wie ebenfalls in Figur 1 gezeigt. Der Saugkörper 4 kann sich zu Beginn eines Ernte-/Pflückprozesses auch (nur) im Bereich (nahe) des ersten Endes Ader Erntevorrichtung 1 befinden, was jedoch nicht gezeigt ist, wobei der Saugkörper 4 sich dann insbesondere außerhalb des Bereiches zwischen dem Führungskörper 3 und dem ersten Ende A befindet, also ausgehend vom Führungskörper 3 über das erste Ende A hinweg in Richtung des Erntegutes bewegt wird. Der Saugkörper 4 ist entlang der Längsachse C der Erntevorrichtung 1 dadurch beweglich ausgeführt, dass der Saugkörper 4 bzw. der Kopf des Balgsaugers mit einem entlang der Längsachse C der Erntevorrichtung 1 beweglichen rohrförmigen Luftkanal 6 verbunden ist, welcher den Führungskörper 3 und den Basiskörper 2 durchdringt und auf der Längsachse C der Erntevorrichtung 1 liegt. Mittels des rohrförmigen Luftkanals 6 erfolgt eine Verbindung des Saugkörpers 4 mit dem Vakuumsystem. In dem Saugkörper 4 ist bevorzugt ein Sensor zur Erkennung der Annäherung der Erntevorrichtung 1 an das Erntegut bzw. eine Frucht integriert. Im einfachsten Fall kann hierfür ein Lichtsensor verwendet werden, der durch die Frucht bei Annäherung abgedunkelt wird.

Der Transport des mittels des Saugkörpers 4 fixierten Ernteguts in Richtung des Führungskörpers 3, d. h. insbesondere ein Bewegen des Erntegutes zum Zweck eines (Um- )Greifens des Erntegutes in Vorbereitung auf eine Ernte bzw. ein Pflücken, erfolgt zum Beispiel durch alleiniges Bewegen des Saugkörpers 4 in Richtung des Führungskörpers 3, währenddessen der Basiskörper 2, der Führungskörper 3 und die Stäbe 5 nicht gegenüber dem Erntegut bewegt werden, wobei natürlich die Stäbe 5 zuvor elastisch verformt bzw. infolge einer Drehung des Führungskörpers 3, des Basiskörpers 2 oder des Führungskörpers 3 und des Basiskörpers 2 zum Öffnen der Erntevorrichtung 1 eine Ausweichbewegung vollführt haben, so dass sich die Stäbe 5 im Bereich zwischen Führungskörper 3 und dem ersten Ende A von der Längsachse C fortbewegen bzw. sich der Abstand der Stäbe 5 von der Längsachse C vergrößert, siehe Figur 2. In einer möglichen Ausführung erfolgt eine kombinierte bzw. gemeinsame Bewegung des Saugkörpers 4 in Richtung des Führungskörpers 3, wobei gleichzeitig/simultan auch der Basiskörper 2, der Führungskörper 3 und die Stäbe 5 gegenüber dem Erntegut bewegt werden, zum oben genannten Zweck des Umgreifens des Erntegutes für eine nachfolgende Ernte. Möglich ist natürlich der Transport des mittels des Saugkörpers 4 fixierten Erntegutes zum Zweck eines darauffolgenden (Um-)Greifens des Erntegutes in Vorbereitung auf eine Ernte bzw. ein Pflücken auch dadurch, dass der Saugkörpers 4 nicht gegenüber dem Erntegut bewegt wird, sondern nach einem Ansaugen bzw. Fixieren des Erntegutes mittels des Saugkörpers 4 der Basiskörper 2, der Führungskörper 3 und die elastisch verformten Stäbe 5, also die geöffnete Erntevorrichtung 1, gegenüber dem Saugkörper 4 und dem Erntegut bewegt werden, d. h. die geöffnete Erntevorrichtung 1 wird über das Erntegut geschoben, wobei der Saugkörper 4 und das Erntegut stillstehen.

Nach Abschluss des Transports des mittels des Saugkörpers 4 fixierten Ernteguts in Richtung des Führungskörpers 3 wird das Erntegut zunächst zwischen den Stäben 5 in dem Bereich zwischen dem Führungskörper 3 und dem ersten Ende A aufgenommen bzw. umschlossen. Im weiteren Verlauf erfolgt eine Beeinflussung der elastischen Verformung der Stäbe 5 insofern, als diese Verformung wieder rückgängig gemacht wird, so dass sich die Stäbe 5 im Bereich zwischen Führungskörper 3 und dem ersten Ende A wieder zu der Längsachse C hinbewegen bzw. sich der Abstand der Stäbe 5 von der Längsachse C wieder verkleinert.

Zur Aufhebung der Verformung (Entformung) der Stäbe 5 wird eine (erneute) Drehbewegung eingeleitet und zwar eine Drehbewegung in die gegenüber der jeweils vorherigen (zum Öffnen der Erntevorrichtung 1 erforderlichen; komplementären) Drehbewegung entgegengesetzten Richtung/Drehrichtung des Führungskörpers 3 und/oder des Basiskörpers 2 um die Längsachse C, so dass sich die Stäbe 5 in Vorbereitung auf eine Ernte bzw. eine Trennung des Erntegutes von einer Pflanze an der Oberfläche des Erntegutes, gewissermaßen fächerartig, anlegen und das Erntegut umgreifen bzw. fixieren. Das Umschließen des Erntegutes mit den erfindungsgemäß ausgeführten und erfindungsgemäß verformten/rückfedernden/entformten Stäben 5 kann die schon vorhandene Fixierung des Erntegutes mittels des Saugkörpers 4 ersetzen oder ergänzen, also eine Verbindung zwischen Saugkörper 4 und Vakuumsystem kann unterbrochen werden, nachdem die Stäbe 5 das Erntegut umschließen oder weiterhin aufrechterhalten werden, um das Erntegut besonders sicher zu fixieren.

Wie in den Figuren 1 bis 3 gezeigt, sind die Spitzen der Stäbe 5 in einem Bereich an dem ersten Ende A mit einem weichen Material 7 ummantelt, um mechanische Einwirkungen auf das Erntegut bzw. die Frucht bzw. die Pflanze weiter zu verringern.

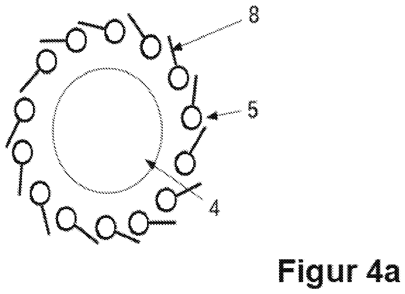

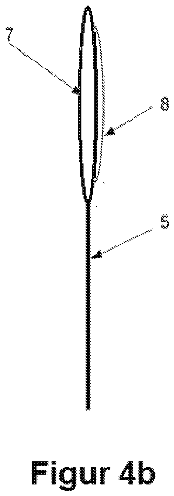

In einer vorteilhaften Ausführung der vorliegenden Erfindung umfassen alle (oder ggf. auch nur einzelne) Stäbe 5 Schneidklingen 8, wie in Figur 4a und Figur 4b gezeigt. Die Schneidklingen 8 sind derart an den Stäben 5 angeordnet, dass wenn die Erntevorrichtung 1 nicht geöffnet ist, d. h. die Stäbe 5 nicht elastisch verformt sind, die an den Stäben 5 angeordneten Schneidklingen 8 in Richtung eines jeweils benachbarten Stabes 5 weisen (siehe Figur 4a), so dass wenn mittels der Erntevorrichtung 1 Erntegut umgriffen wird, sich die Schneidklingen 8 aufrichten, da, bedingt durch die elastische Verformung der Stäbe 5, welche durch das Umgreifen/Fixieren des Erntegutes zumindest zum Teil aufrechterhalten bleibt, sich die Stäbe 5 um die Achse ihrer Längserstreckung drehen, wobei im Ergebnis, bei dem auf den Vorgang des Umfassens bzw. Umgreifens des Erntegutes folgenden Vorgang der Trennung des Erntegutes von der jeweiligen Pflanze, die Schneidklingen 8 eben für diese Trennung bereitstehen, wobei die Trennung dadurch erfolgt, dass die gesamte Erntevorrichtung 1 um die Längsachse C gedreht wird, so dass die Schneidklingen 8, d. h. zumindest eine oder einige der Schneidklingen 8, in Kontakt mit dem Stängel bzw. Stiel des Ernteguts treten und insbesondere infolge einer weiteren Drehung der Erntevorrichtung 1 um die Längsachse C den Stängel bzw. Stiel durchtrennen. Bevorzugt sind die Schneidklingen 8 in dem weichen Material 7 eingebettet bzw. mit dem weichen Material 7 kombiniert, das an den Spitzen der Stäbe 5 in einem Bereich an dem ersten Ende A angeordnet ist bzw. die Spitzen der Stäbe 5 in diesem Bereich ummantelt.

Erfindungsgemäß ist es zudem möglich, mittels der Erntevorrichtung 1 eine Größenerkennung des Erntegutes bzw. der betreffenden zu pflückenden Frucht durchzuführen. Wie schon beschrieben, erfolgt das Öffnen und Schließen der Erntevorrichtung 1 mit Hilfe eines geeigneten Antriebs, umfassend eine (integrierte) Positionsregelung. Da die Größe des zu greifenden Ernteguts bzw. der zu greifenden Frucht zunächst unbekannt ist, wird der Sollwert für die Regelung der Öffnung/des Schließens der erfindungsgemäßen Erntevorrichtung 1 fürs erste (immer) so gewählt, dass sich die Erntevorrichtung 1 wieder bis zur Basisstellung schließen würde. Aus den vom (Positions- )Regler generierten Stellsignalen lassen sich, durch die plötzlich wirkende Gegenkraft beim Umschließen des Ernteguts, Informationen darüber gewinnen, ob und wie stark die Erntevorrichtung 1 bzw. der erfindungsgemäße Fächergreifer das Erntegut/die Frucht umschlossen hat (Änderung des Stellgrößenverlaufs durch die Gegenkraft). Eine entsprechende Korrektur des Sollwertes für die Positionsregelung führt zu einer Anpassung der Greifkraft. Das ist insbesondere von Vorteil, wenn sich zu pflückende Früchte sehr in ihrer Größe unterscheiden. Die Information über die ermittelte Fruchtgröße kann zur Vorsortierung der Früchte bereits während des Ernteprozesses verwendet werden.

Zusammengefasst erfolgt erfindungsgemäß bei Verwendung der erfindungsgemäßen Erntevorrichtung 1 eine Bestimmung der Größe des Ernteguts in Abhängigkeit von Informationen betreffend den Drehwinkel des (zum Öffnen und Schließen der Erntevorrichtung 1) drehbewegten Führungskörpers 3 und/oder drehbewegten Basiskörpers 2, wobei dadurch eine Bestimmung der Größe des Ernteguts erfolgt, dass eine Differenz gebildet wird zwischen dem Drehwinkel des (zum Öffnen und Schließen der Erntevorrichtung 1) drehbewegten Führungskörpers 3 oder drehbewegten Basiskörpers 2 bei einer Ausgangsstellung der Erntevorrichtung 1 und dem Drehwinkel des drehbewegten Führungskörpers 3 oder drehbewegten Basiskörpers 2, wobei sich die Stäbe 5 an der Oberfläche des Erntegutes beginnen anzulegen oder das Anlegen der Stäbe 5 an der Oberfläche des Erntegutes erfolgt oder abgeschlossen ist und (als Nebenbedingung) eine wirkende Gegenkraft beim Umschließen des Ernteguts einen bestimmten Wert (Schwellenwert) aufweist (überschreitet), wobei die Differenz zwischen den Drehwinkeln die Größe des Ernteguts repräsentiert.

Allgemein erfolgt somit eine Bestimmung der Größe des Ernteguts mittels der Erntevorrichtung 1 in Abhängigkeit von dem Drehwinkel/der Drehwinkelstellung/Drehwinkelausrichtung des um die Längsachse C drehbewegten Führungskörpers 3 (oder des um die Längsachse C drehbewegten Basiskörpers 2) vor dem Öffnen der Erntevorrichtung 1, d. h. des Drehwinkels des um die Längsachse C drehbewegten Führungskörpers 3 (oder des um die Längsachse C drehbewegten Basiskörpers 2) in der Ausgangsstellung der Erntevorrichtung 1 und in Abhängigkeit von dem Drehwinkel/der Drehwinkelstellung/Drehwinkelausrichtung des um die Längsachse C drehbewegten Führungskörpers 3 (oder des um die Längsachse C drehbewegten Basiskörpers 2), der sich dann ergibt, wenn sich die Stäbe 5 in Vorbereitung auf eine Ernte bzw. eine Trennung des Erntegutes von einer Pflanze an der Oberfläche des Erntegutes (fächerartig) anlegen und das Erntegut umgreifen bzw. fixieren.

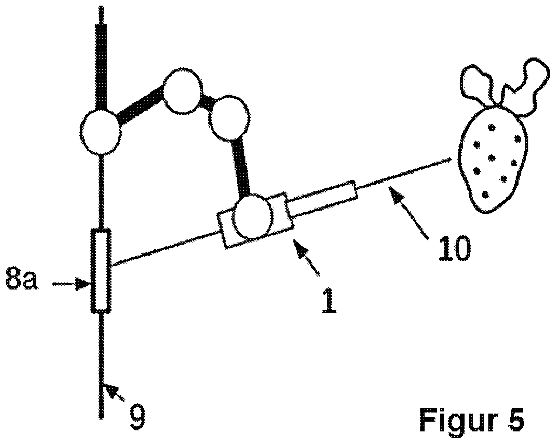

Erfindungsgemäß ist es außerdem vorgesehen, dass eine Erkennung der Lage des Erntegutes/von Früchten bzw. eine Erntegut-/Fruchterkennung mit Hilfe einer Kamera 8a und einem Bildverarbeitungssystem erfolgt, wobei die Kamera 8a auf einer Position entlang der gedachten Verlängerung einer/der ersten Roboterachse 9 montiert ist, siehe Figur 5. Wird die erfindungsgemäße Erntevorrichtung 1 dann im Ernte-/Pflückprozess entlang der Verbindungslinie 10 zwischen Kamera 8a und Erntegut/Frucht geführt, ist eine Tiefeninformation für die Lage des Ernteguts/der Frucht nicht erforderlich. Diese bevorzugte Anordnung der Kamera 8a vereinfacht den Erkennungsprozess wesentlich und ermöglicht den Einsatz kostengünstiger Hardware. Außerdem verringert sich die Anzahl der Freiheitsgrade für die Erntevorrichtung 1. Die Anzahl der erforderlichen Roboterachsen reduziert sich damit auf vier. Wie schon beschrieben, wird die Annäherung der Erntevorrichtung 1 mit Hilfe eines Sensors an der Spitze oder im Inneren ermittelt. Dafür eignet sich ein einfacher Lichtsensor im Inneren eines Rohres.

Abschließend wird der Ernte-/Pflück-/Greifprozess mittels der erfindungsgemäßen Erntevorrichtung 1 zum Ernten einer Frucht, insbesondere einer Erdbeere, beschrieben.

Dieser Prozess läuft folgendermaßen schrittweise ab:
1. In der geschlossenen Stellung/Ausgangsstellung gemäß Figur 1 wird die Erntevorrichtung mit Hilfe eines Roboterarms an eine Frucht geführt, wobei die Position der Frucht insbesondere mit einem System mit einer Kamera 8a ermittelt wird, siehe Figur 5. Wird die Annäherung erkannt, so wird durch eine Steuerung die Erzeugung von Unterdruck im rohrförmigen Luftkanal 6 und somit im Saugkörper 4 veranlasst. Dadurch wird die Frucht am Saugkörper 4 fixiert.
2. Drehbewegen des Basiskörpers 2 und/oder des Führungskörpers 3, so dass sich die Erntevorrichtung 1 bzw. der Greifer öffnet.
3. Zurückziehen des Saugkörpers 4 in Richtung des Führungskörpers 3, wobei gleichzeitig die geöffnete Erntevorrichtung 1 über die Frucht geschoben wird.
4. Liegt die Frucht tief genug in der Erntevorrichtung 1/im Greifkorb (liegen zum Beispiel >50% des Fruchtvolumens im Greifkorb), wird die Erntevorrichtung 1 geschlossen, durch ein Drehbewegen des Basiskörpers 2 und/oder des Führungskörpers 3 in einer gegenüber Schritt 2. entgegengesetzten Richtung, wobei sich durch die Federwirkung der Stäbe 5 die Erntevorrichtung 1/der Greifkorb an die Form der Frucht anpasst. Dadurch kommt es zu einer gleichmäßigen Kraftverteilung über die Fruchtoberfläche.
5. Drehbewegen der gesamten Erntevorrichtung 1/des Greifers um die Längsachse C, z. B. um 180 bis 360 Grad und anschließendes oder gleichzeitiges Herausziehen der Erntevorrichtung 1 aus der Staude/der Pflanze. Dadurch wird die Frucht von der Pflanze getrennt.
6. Ablegen der Frucht und Zurückbringen der Erntevorrichtung 1 in die Basisposition/Ausgangsstellung gemäß Figur 1. Damit ist der Pflückprozess abgeschlossen.

## Patentansprüche

1. Erntevorrichtung (1) mit zwei Enden (A, B), **wobei**
- das erste Ende (A) dem Erntegut zugewandt ist und das zweite Ende (B) dem Erntegut abgewandt ist und sich zwischen den beiden Enden (A, B) eine Längsachse (C) der Erntevorrichtung (1) erstreckt,
- ausgehend vom zweiten Ende (B), entlang der Längsachse (C), ein Basiskörper (2), ein Führungskörper (3) und ein Saugkörper (4) angeordnet sind,
- eine Vielzahl von Stäben (5) um die Längsachse (C) angeordnet ist, welche sich vom Basiskörper (2) bis zum ersten Ende (A) erstrecken,
- der Saugkörper (4) entlang der Längsachse (C) beweglich ist,
- die Stäbe (5) mit dem Basiskörper (2) verbunden sind und durch Ausnehmungen in dem Führungskörper (3) oder durch Leitelemente am Führungskörper (3) geführt sind,
- sich durch eine Drehbewegung des Führungskörpers (3) um die Längsachse (C) gegenüber dem nicht drehbewegten Basiskörper (2) **oder** durch eine Drehbewegung des Basiskörpers (2) um die Längsachse (C) gegenüber dem nicht drehbewegten Führungskörper (3) **oder** durch eine gegensinnige Drehbewegung von Führungskörper (3) und Basiskörper (2) jeweils um die Längsachse (C), die Stäbe (5) elastisch verformen und im Bereich zwischen Führungskörper (3) und dem ersten Ende (A) von der Längsachse (C) fortbewegen,
- wenn mittels des Saugkörpers (4) fixiertes Erntegut in Richtung des Führungskörpers (3) transportiert und zwischen den Stäben (5) in dem Bereich zwischen dem Führungskörper (3) und dem ersten Ende (A) aufgenommen wird, durch eine erneute Drehbewegung des Führungskörpers (3) um die Längsachse (C) **oder** des Basiskörpers (2) um die Längsachse (C) **oder** von Führungskörper (3) und Basiskörper (2) jeweils um die Längsachse (C) die elastische Verformung der Stäbe (5) beeinflusst wird, so dass sich die Stäbe (5) in Vorbereitung auf eine Trennung des Erntegutes von einer Pflanze an der Oberfläche des Erntegutes anlegen und das Erntegut umgreifen.

2. Erntevorrichtung (1) nach Patentanspruch 1, wobei die Erntevorrichtung (1) im Bereich des zweiten Endes (B) mit dem Arm eines Roboters verbunden ist.

3. Erntevorrichtung (1) nach Patentanspruch 1 oder 2, wobei der Basiskörper (2) und der Führungskörper (3) mit einem Abstand zueinander entlang der Längsachse (C) angeordnet sind.

4. Erntevorrichtung (1) nach Patentanspruch 1 bis 3, wobei die Stäbe (5) die Längsachse (C) kreisförmig umschließen und 16 oder mehr Stäbe (5) verwendet werden.

5. Erntevorrichtung (1) nach Patentanspruch 1 bis 4, wobei der Saugkörper (4) ein Balgsauger ist, der mit einem Vakuumsystem zusammenwirkt, so dass ein Unterdruck in dem Saugkörper (4) erzeugt und eine erste Verbindung zwischen Erntegut und Erntevorrichtung (1) durch ein Ansaugen und Fixieren des Erntegutes am Saugkörper (4) hergestellt wird.

6. Erntevorrichtung (1) nach Patentanspruch 1 bis 5, wobei der Saugkörper (4) dadurch entlang der Längsachse (C) beweglich ausgeführt ist, dass der Saugkörper (4) mit einem entlang der Längsachse (C) beweglichen rohrförmigen Luftkanal (6) verbunden ist, welcher den Führungskörper (3) und den Basiskörper (2) durchdringt.

7. Erntevorrichtung (1) nach Patentanspruch 1 bis 6, wobei in dem Saugkörper (4) ein Sensor zur Erkennung der Annäherung der Erntevorrichtung (1) an das Erntegut integriert ist.

8. Erntevorrichtung (1) nach Patentanspruch 1 bis 7, wobei alle oder einzelne Stäbe (5) Schneidklingen (8) umfassen, wobei bei einem auf den Vorgang des Umgreifens des Erntegutes folgenden Vorgang der Trennung des Erntegutes von der jeweiligen Pflanze, die Schneidklingen (8) für diese Trennung bereitstehen, wobei die Trennung dadurch erfolgt, dass die gesamte Erntevorrichtung (1) um die Längsachse (C) gedreht wird, so dass die Schneidklingen (8) in Kontakt mit dem Stiel des Ernteguts treten und den Stiel durchtrennen.

9. Erntevorrichtung (1) nach Patentanspruch 1 bis 8, wobei bei Verwendung der Erntevorrichtung (1) eine Bestimmung der Größe des Erntegutes in Abhängigkeit von Informationen betreffend den Drehwinkel des drehbewegten Führungskörpers (3) und/oder drehbewegten Basiskörpers (2) erfolgt.

10. Erntevorrichtung (1) nach Patentanspruch 1 bis 9, wobei eine Erkennung des Erntegutes mit Hilfe einer Kamera (8a) und einem Bildverarbeitungssystem erfolgt, wobei die Kamera (8a) auf einer Position entlang der gedachten Verlängerung einer ersten Roboterachse (9) angeordnet ist, wobei die Erntevorrichtung (1) im Ernteprozess entlang der Verbindungslinie (10) zwischen Kamera (8a) und Erntegut geführt wird.

## Claims

1. Harvesting device (1) having two ends (A, B), **wherein**
- the first end (A) faces the harvested produce, and the second end (B) faces away from the harvested produce, and a longitudinal axis (C) of the harvesting device (1) extends between the two ends (A, B),
- proceeding from the second end (B), a main body (2), a guiding body (3), and a suction member (4) are disposed along the longitudinal axis (C),
- disposed about the longitudinal axis (C) are a multiplicity of rods (5) which extend from the main body (2) to the first end (A),
- the suction member (4) is movable along the longitudinal axis (C),
- the rods (5) are connected to the main body (2) and are guided by clearances in the guiding body (3) or by guiding elements on the guiding body (3),
- the rods (5) are elastically deformed by a rotating movement of the guiding body (3) about the longitudinal axis (C) relative to the non-rotatable main body (2) **or** by a rotating movement of the main body (2) about the longitudinal axis (C) relative to the non-rotatable guiding body (3) **or** by a counter rotating movement of the guiding body (3) and the main body (2) in each case about the longitudinal axis (C), and in the region between the guiding body (3) and the first end (A) move away from the longitudinal axis (C),
- when harvested produce fixed by means of the suction member (4) is transported in the direction of the guiding body (3) and received between the rods (5) in the region between the guiding body (3) and the first end (A), the elastic deformation of the rods (5) is influenced by a renewed rotating movement of the guiding body (3) about the longitudinal axis (C) **or** of the main body (2) about the longitudinal axis (C) **or** of the guiding body (3) and the main body (2) in each case about the longitudinal axis (C) so that the rods (5) in preparation for separating the harvested produce from a plant place themselves on the surface of the harvested produce and encompass the harvested produce.

2. Harvesting device (1) according to Patent Claim 1, wherein the harvesting device (1) in the region of the second end (B) is connected to the arm of a robot.

3. Harvesting device (1) according to Patent Claim 1 or 2, wherein the main body (2) and the guiding body (3) are disposed at a mutual spacing along the longitudinal axis (C).

4. Harvesting device (1) according to Patent Claim 1 to 3, wherein the rods (5) encompass the longitudinal axis (C) in a circular manner, and 16 or more rods (5) are used.

5. Harvesting device (1) according to Patent Claim 1 to 4, wherein the suction member (4) is a bellows suction member which interacts with a vacuum system so that a negative pressure is generated in the suction member (4), and a first connection between the harvested produce and the harvesting device (1) is established by suctioning and fixing the harvested produce to the suction member (4).

6. Harvesting device (1) according to Patent Claim 1 to 5, wherein the suction member (4) is embodied so as to be movable along the longitudinal axis (C) in that the suction member (4) is connected to a tubular air duct (6) which is movable along the longitudinal axis (C) and penetrates the guiding body (3) and the main body (2).

7. Harvesting device (1) according to Patent Claim 1 to 6, wherein a sensor for detecting the approach of the harvesting device (1) to the harvested produce is integrated in the suction member (4).

8. Harvesting device (1) according to Patent Claim 1 to 7, wherein all or individual rods (5) comprise cutting blades (8), wherein in a procedure of separating the harvested produce from the respective plant, which follows the procedure of encompassing the harvested produce, the cutting blades (8) are kept ready for this separation, wherein the separation takes place in that the entire harvesting device (1) is rotated about the longitudinal axis (C) so that the cutting blades (8) come into contact with the stem of the harvested produce and sever the stem.

9. Harvesting device (1) according to Patent Claim 1 to 8, wherein in the use of the harvesting device (1) a determination of the size of the harvested produce takes place as a function of items of information pertaining to the rotation angle of the rotating guiding body (3) and/or rotating main body (2) .

10. Harvesting device (1) according to Patent Claim 1 to 9, wherein an identification of the harvested produce takes place with the aid of a camera (8a) and an image processing system, wherein the camera (8a) is disposed at a position along the imaginary extension of a first robot axis (9), wherein the harvesting device (1) in the harvesting process is guided along the connecting line (10) between the camera (8a) and the harvested produce.

## Revendications

1. Dispositif de récolte (1) comprenant deux extrémités (A, B), dans lequel
- la première extrémité (A) est orientée vers le produit récolté et la deuxième extrémité (B) est orientée à l'opposé du produit récolté et un axe longitudinal (C) du dispositif de récolte (1) s'étend entre les deux extrémités (A, B),
- en partant de la deuxième extrémité (B), le long de l'axe longitudinal (C), un corps de base (2), un corps de guidage (3) et un corps d'aspiration (4) sont agencés,
- une pluralité de barres (5) est agencée autour de l'axe longitudinal (C), lesquelles barres s'étendent du corps de base (2) jusqu'à la première extrémité (A),
- le corps d'aspiration (4) est mobile le long de l'axe longitudinal (C),
- les barres (5) sont reliées au corps de base (2) et sont guidées par des évidements dans le corps de guidage (3) ou par des éléments de guidage sur le corps de guidage (3),
- par un mouvement de rotation du corps de guidage (3) autour de l'axe longitudinal (C) par rapport au corps de base (2) non mobile en rotation ou par un mouvement de rotation du corps de base (2) autour de l'axe longitudinal (C) par rapport au corps de guidage (3) non mobile en rotation ou par un mouvement de rotation de sens contraire du corps de guidage (3) et du corps de base (2) respectivement autour de l'axe longitudinal (C), les barres (5) se déforment élastiquement et s'éloignent de l'axe longitudinal (C) dans la zone située entre le corps de guidage (3) et la première extrémité (A),
- lorsque la récolte fixée au moyen du corps d'aspiration (4) est transportée en direction du corps de guidage (3) et est ramassée entre les barres (5) dans la zone située entre le corps de guidage (3) et la première extrémité (A), par un nouveau mouvement de rotation du corps de guidage (3) autour de l'axe longitudinal (C) ou du corps de base (2) autour de l'axe longitudinal (C) ou du corps de guidage (3) et du corps de base (2) respectivement autour de l'axe longitudinal (C), la déformation élastique des barres (5) est influencée, de sorte que les barres (5) s'appliquent contre la surface du produit récolté en préparation d'une séparation du produit récolté d'une plante et entourent le produit récolté.

2. Dispositif de récolte (1) selon la revendication 1, dans lequel le dispositif de récolte (1) est relié au bras d'un robot dans la zone de la deuxième extrémité (B) .

3. Dispositif de récolte (1) selon la revendication 1 ou 2, dans lequel le corps de base (2) et le corps de guidage (3) sont agencés à une certaine distance l'un de l'autre le long de l'axe longitudinal (C).

4. Dispositif de récolte (1) selon les revendications 1 à 3, dans lequel les barres (5) entourent l'axe longitudinal (C) selon un cercle et 16 barres (5) ou plus sont utilisées.

5. Dispositif de récolte (1) selon les revendications 1 à 4, dans lequel le corps d'aspiration (4) est une ventouse à soufflet qui coopère avec un système de vide, de sorte qu'une dépression est créée dans le corps d'aspiration (4) et qu'une première liaison entre la récolte et le dispositif de récolte (1) est établie par une aspiration et une fixation de la récolte sur le corps d'aspiration (4).

6. Dispositif de récolte (1) selon les revendications 1 à 5, dans lequel le corps d'aspiration (4) est réalisé mobile le long de l'axe longitudinal (C) par le fait que le corps d'aspiration (4) est relié à un canal d'air (6) tubulaire mobile le long de l'axe longitudinal (C), qui traverse le corps de guidage (3) et le corps de base (2).

7. Dispositif de récolte (1) selon les revendications 1 à 6, dans lequel un capteur est intégré dans le corps d'aspiration (4) pour détecter l'approche du produit récolté par le dispositif de récolte (1).

8. Dispositif de récolte (1) selon les revendications 1 à 7, dans lequel toutes les barres (5) ou certaines d'entre elles comprennent des lames de coupe (8), les lames de coupe (8) étant prêtes pour cette séparation lors d'une opération de séparation de la récolte de la plante respective qui suit l'opération de saisie de la récolte, la séparation s'effectuant par le fait que l'ensemble du dispositif de récolte (1) est entraîné en rotation autour de l'axe longitudinal (C), de sorte que les lames de coupe (8) viennent en contact avec la tige de la récolte et coupent la tige.

9. Dispositif de récolte (1) selon les revendications 1 à 8, dans lequel, lors de l'utilisation du dispositif de récolte (1), la taille du produit récolté est déterminée en fonction d'informations concernant l'angle de rotation du corps de guidage (3) mobile en rotation et/ou du corps de base (2) mobile en rotation.

10. Dispositif de récolte (1) selon les revendications 1 à 9, dans lequel une reconnaissance du produit récolté est effectuée à l'aide d'une caméra (8a) et d'un système de traitement d'images, la caméra (8a) étant disposée à une position le long du prolongement imaginaire d'un premier axe de robot (9), le dispositif de récolte (1) étant guidé lors du processus de récolte le long de la ligne de liaison (10) entre la caméra (8a) et le produit récolté.
